Europäisches Patentamt

European Patent Office

Office européen des brevets

(11) Numéro de publication: **0 237 370 B1**

# FASCICULE DE BREVET EUROPEEN

(45) Date de publication du fascicule du brevet:
28.12.88

(51) Int. Cl.⁴: **B 64 C 13/50,** H 04 B 9/00, G 05 D 1/00

(21) Numéro de dépôt: 87400214.0

(22) Date de dépôt: 30.01.87

(54) **Système pour la commande d'une surface aérodynamique mobile d'un aéronef.**

(30) Priorité: 05.02.86 FR 8601576

(43) Date de publication de la demande:
16.09.87 Bulletin 87/38

(45) Mention de la délivrance du brevet:
28.12.88 Bulletin 88/52

(84) Etats contractants désignés:
BE DE GB IT NL SE

(56) Documents cités:
EP-A- 0 046 875
EP-A- 0 084 958
GB-A- 2 095 427

AIRCRAFT ENGINEERING, vol. 49, no. 1, janvier 1977, pages 4-10. Londres, GB; M. SCOTT: "Electrical flight control for boeing YC-14"

(73) Titulaire: AEROSPATIALE SOCIETE NATIONALE INDUSTRIELLE Société Anonyme dite:, 37, Boulevard de Montmorency, F-75016 Paris (FR)

(72) Inventeur: Laborie, Jean-Pierre, 76 rue des Pins, F-31700 Beauzelle (FR)
Inventeur: Domerque, Jean-Paul, 4 rue Gabriel Péri, F-31000 Toulouse (FR)
Inventeur: Desjean, Pierre, 38 rue Concorde, F-31700 Blagnac (FR)
Inventeur: Palandjian, Philippe, 4 Chemin de Guyenne Cornebarrieu, F-31700 Blagnac (FR)

(74) Mandataire: Bonnetat, Christian et al, Cabinet PROPI Conseils 23 rue de Léningrad, F-75008 Paris (FR)

## Description

La présente invention concerne un système pour la commande d'une surface aérodynamique mobile d'un aéronef.

On sait que, de façon usuelle, les systèmes pour la commande d'une surface aérodynamique (volet, aileron, gouverne, etc.) d'un aéronef sont mécaniques, électriques ou électrohydrauliques.

Les systèmes mécaniques présentent des inconvénients de poids, d'encombrement, d'effort de commande et de vulnérabilité en cas de choc ou d'élongation de la structure de l'aéronef; de plus, leurs performances sont limitées et ne permettent pas la commande de la gouverne de profondeur d'avions à stabilité artificielle, c'est-à-dire dans lesquels le centre de gravité se trouve en arrière du point par rapport auquel le moment des forces aérodynamiques est indépendant de l'incidence, ce qui nécessite d'effectuer en permanence des corrections en agissant sur la gouverne de profondeur à une fréquence élevée.

Quant à eux, les systèmes électriques ou électrohydrauliques sont sensibles aux parasites électromagnétiques, tels que la foudre, ils émettent des rayonnements et ils nécessitent un poids élevé de conducteurs électriques.

La présente invention a pour objet de remédier aux inconvénients de ces systèmes de commande connus. Plus particulièrement, l'objet de la présente invention est un système permettant:
— le découplement galvanique des équipements;
— l'insensibilité aux parasites électromagnétiques;
— l'absence de rayonnement;
— la réduction de la maintenance, des masses et des coûts;
— la possibilité de fonctions complexes, et
— la possibilité d'utiliser une source d'énergie unique, à la fois pour la transmission des ordres de commande et pour le déplacement de ladite surface aérodynamique.

Par rapport au document GB-A-2095427 qui décrit un système pour la commande d'une surface aérodynamique mobile d'un aéronef selon le préambule de la revendication 1, l'invention est caractérisée par les caractéristiques selon la partie caractérisante de la revendication 1.

Ainsi, on obtient un système de commande optique permettant d'obtenir les avantages mentionnés ci-dessus.

De plus, lorsque, de façon usuelle, ledit organe volontaire et ledit premier capteur de position se trouvent dans le poste de pilotage de l'aéronef, alors que ladite servocommande, ladite servovalve et ledit second capteur de position sont disposés au voisinage de ladite surface aérodynamique mobile, il est avantageux que les premiers, seconds et troisièmes moyens de conversion optique/électrique, lesdits premiers moyens de conversion électrique/optique et le dispositif de calcul et d'asservissement soient disposés dans la partie centrale dudit aéronef au voisinage du centre de gravité de celui-ci et que lesdits moyens d'alimentation électrique et lesdits seconds moyens de conversion électrique/optique soient disposés au voisinage de ladite surface aérodynamique mobile.

En effet, dans le cas où le système de commande est destiné à un aéronef à stabilité artificielle pourvu d'un dispositif gyrométrique de stabilisation, disposé dans la partie centrale dudit aéronef au voisinage du centre de gravité de cet aéronef, ledit dispositif de calcul et d'asservissement peut être disposé très près dudit dispositif gyrométrique, dans une partie protégée de l'aéronef.

Le dispositif gyrométrique peut être de tout type connu. Cependant, il est avantageux qu'il soit capable d'émettre des signaux qui sont adressés audit dispositif de calcul et d'asservissement par une cinquième liaison par fibres optiques, ledit dispositif de calcul et d'asservissement comportant des quatrièmes moyens de conversion optique/électrique reliés à ladite cinquième liaison. De plus, de préférence, des troisièmes moyens de conversion électrique/optique sont associés auxdits moyens d'alimentation électrique et sont reliés audit dispositif gyrométrique par une sixième liaison par fibres optiques.

Ainsi, le dispositif électrique de calcul et d'asservissement et le dispositif gyrométrique sont complètement découplés galvaniquement entre eux, ainsi que par rapport à leur source d'alimentation.

Ce dispositif gyrométrique peut être de nature optique, ou bien électrique. Dans ce dernier cas, il est alors associé à des moyens de conversion optique/électrique et/ou électrique/optique appropriés.

Lorsque lesdits premier et second capteurs de position nécessitent une alimentation optique, il est de même avantageux que des quatrièmes et cinquièmes moyens de conversion électrique/optique soient associés auxdits moyens d'alimentation électrique et soient respectivement reliés auxdits premier et second capteurs de position par une septième et une huitième liaison par fibres optiques.

Par ailleurs, si ladite servovalve est du type optomécanique, elle peut être directement reliée à ladite quatrième liaison par fibres optiques. En revanche, elle peut être du type à commande électrique et alors des cinquièmes moyens de conversion optique/électrique sont associés à ladite servovalve et sont reliés à ladite quatrième liaison par fibres optiques.

Si ladite source de puissance susceptible d'actionner la surface aérodynamique est électrique, lesdits moyens d'alimentation électrique peuvent être constitués par un diviseur de tension ou analogue. Toutefois, si ladite source de puissance susceptible d'actionner la surface aérodynamique est hydraulique, lesdits moyens d'alimentation électrique sont constitués par un générateur hydroélectrique.

Ainsi, dans tous les cas, l'alimentation des divers éléments nécessaires à l'élaboration des ordres pour la commande de déplacement de la surface aérodynamique est effectuée à partir de l'alimentation de puissance de la servocommande de la surface aérodynamique correspondante. Par suite, la perte de la commande due à un défaut d'alimentation ne peut se produire que si l'alimentation de puissance est elle-même perdue, auquel cas la servocommande était déjà perdue.

Quoiqu'il soit bien évident que le système conforme à l'invention puisse être utilisé seul pour la commande de ladite surface aérodynamique, il est avantageux, comme cela est usuel en aéronautique, qu'il soit associé à un système de commande de nature classique (mécanique, électrique ou électrohydraulique). Dans ce dernier cas, il peut servir de système de secours, l'autre système étant principal et utilisé en pilotage normal. Il est alors avantageux que la liaison entre les deux systèmes soit réalisée par fibres optiques.

Les figures du dessin annexé feront bien comprendre comment l'invention peut être réalisée. Sur ces figures, des références identiques désignent des éléments semblables.

La figure 1 montre le schéma synoptique d'un système de commande conforme à l'invention, appliqué à la commande d'une gouverne de profondeur d'un avion à stabilité artificielle.

La figure 2 est une vue en plan schématique partielle d'un tel avion, illustrant une implantation des divers éléments dudit système de commande.

La figure 3 montre le schéma synoptique d'un ensemble pour la commande de la gouverne de profondeur d'un avion, comportant un système de commande normale électrique de type connu et un système de commande de secours du type conforme à l'invention.

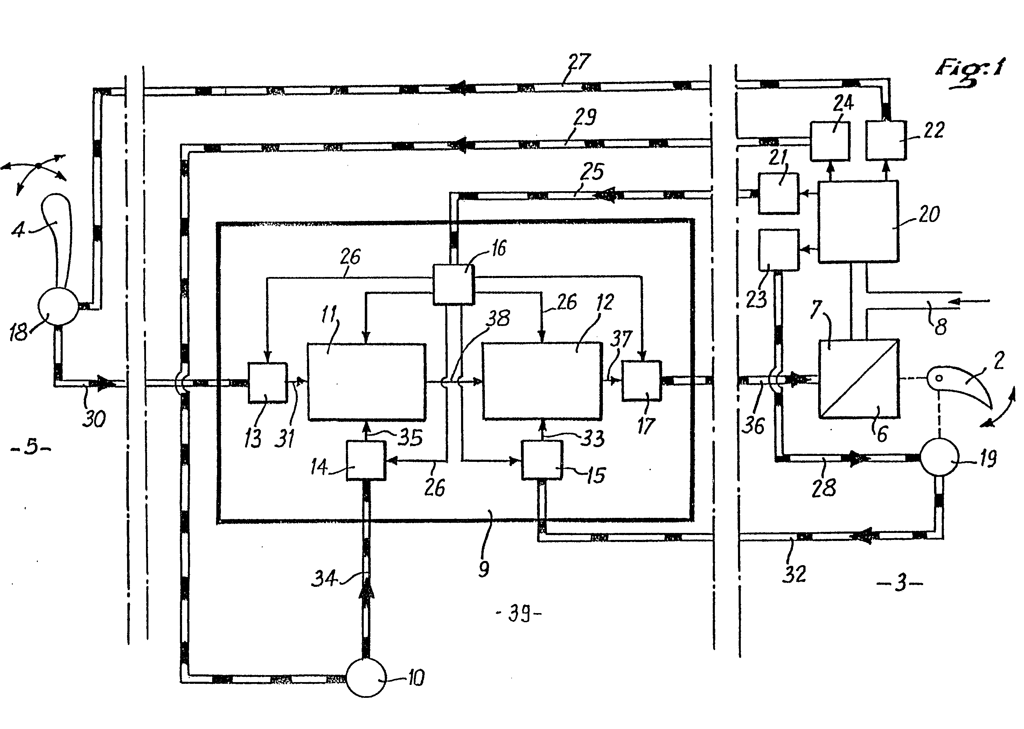

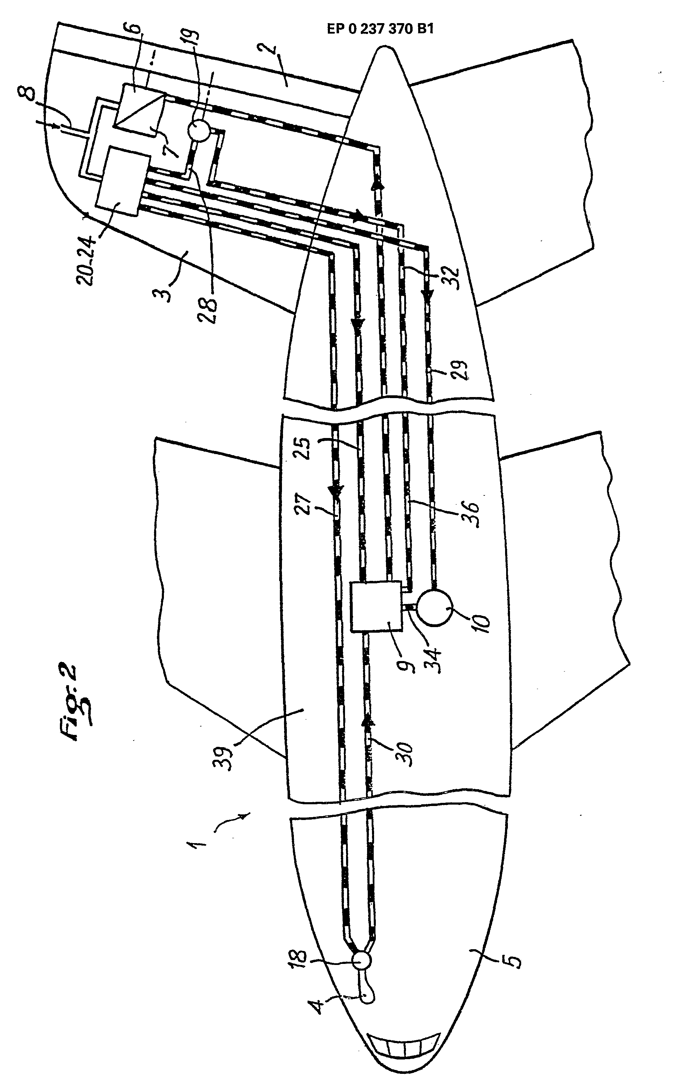

Le système de commande, conforme à l'invention et montré sur les figures 1 et 2, est monté dans un avion 1 et est destiné à commander une gouverne de profondeur 2 articulée, de façon connue et non représentée, sur un empennage horizontal 3.

De façon usuelle, ledit système de commande comprend un manche à balai 4, par exemple du type minimanche latéral, disposé dans le poste de pilotage 5 de l'avion 1 et destiné à être actionné par un pilote ou un copilote. Par ailleurs, également de façon usuelle, la gouverne 2 est actionnée par une servocommande 6, pilotée par une servovalve 7 et alimentée en fluide hydraulique sous pression à partir du réseau hydraulique de bord 8. La servocommande 6 et la servovalve 7 sont logées dans l'empennage 3. Le réseau hydraulique 8 est associé à une source de fluide sous pression (non représentée) dont le fonctionnement est sous la dépendance des moteurs (non représentés) de l'avion 1. De plus, ladite servovalve 7 est elle-même pilotée à partir du manche à balai 4 à travers un dispositif de calcul et d'asservissement 9.

Puisque l'avion 1 est supposé être du type à stabilité artificielle, il est en outre prévu au moins un gyromètre 10 à bord de l'avion 1.

Conformément à l'invention:
— le dispositif de calcul et d'asservissement 9, qui comporte un calculateur 11 et un module d'asservissement 12 de type électrique, comprend de plus des convertisseurs optique/électrique 13 à 16 et un convertisseur électrique/optique 17;
— un capteur optique de position 18 est associé au manche à balai 4 et est susceptible de délivrer un signal optique représentatif de la position de celui-ci;
— un capteur optique de position 19 est associé à la gouverne de profondeur 2 et est susceptible de délivrer un signal optique représentatif de la position de celle-ci;
— un générateur hydroélectrique 20 est branché sur le réseau hydraulique 8 et est susceptible d'engendrer de l'énergie électrique;
— des convertisseurs électrique/optique 21 à 24 sont associés au générateur hydroélectrique 20 et reçoivent l'énergie électrique engendrée par celui-ci;
— une liaison optique 25 est prévue entre le convertisseur électrique/optique 21 et le convertisseur optique/électrique 16, de sorte que le dispositif de calcul et d'asservissement 9 peut être alimenté en énergie électrique à partir du générateur 20, après transport de cette énergie sous forme optique dans la liaison 25. A cet effet, un réseau de conducteurs électriques 26 relie le convertisseur optique/électrique 16 aux autres éléments 11 à 15 et 17 du dispositif 9;
— une liaison optique 27 est prévue entre le convertisseur électrique/optique 22 et le capteur de position 18, de sorte que celui-ci est alimenté en énergie optique, à partir du générateur électrique 20;
— une liaison optique 28 est prévue entre le convertisseur électrique/optique 23 et le capteur de position 19, de sorte que celui-ci est alimenté en énergie optique à partir du générateur électrique 20;
— une liaison optique 29 est prévue entre le convertisseur électrique/optique 24 et le gyromètre 10, de sorte que celui-ci est alimenté en énergie à partir dudit générateur électrique 20. Afin d'éviter une conversion de l'énergie optique transportée par la liaison 29, le gyromètre 10 est du type optique;
— une liaison optique 30 est prévue entre le capteur de position 18 et le convertisseur optique/électrique 13, tandis qu'une liaison électrique 31 relie ce convertisseur 13 au calculateur 11. Ainsi, les déplacements du manche à balai 4 sont transmis audit calculateur 11;
— une liaison optique 32 est prévue entre le capteur de position 19 et le convertisseur optique/électrique 15, tandis qu'une liaison électrique 33 relie ce convertisseur 15 au module d'asservissement 12. Ainsi, les déplacements de la gouverne 2 sont transmis audit module 12;
— une liaison optique 34 est prévue entre le gyromètre 10 et le convertisseur optique/électrique 14, tandis qu'une liaison électrique 35 relie ce convertisseur 14 au calculateur 11. Ainsi, les indications du gyromètre 10 sont transmises audit calculateur 11;
— une liaison optique 36 est prévue entre le convertisseur électrique/optique 17 et la servovalve 7, qui est avantageusement du type optomécanique, tandis qu'une liaison électrique 37 relie le module d'asservissement 12 et ledit convertisseur 17. Ainsi, ledit module d'asservissement 12 transmet, à la servovalve 7, ses ordres de déplacement de la gouverne 2, par l'intermédiaire de la liaison optique 36.

Bien entendu, le calculateur 11 et le module d'asservissement 12 sont reliés par une liaison électrique 38, interne au dispositif 9.

On voit ainsi que, grâce au système de commande conforme à la présente invention, l'ordre de déplacement de la gouverne 2 donné au manche à balai 4 par le pilote est transmis par le capteur de position 18, qui en recopie la position, puis délivré au calculateur 11 par l'intermédiaire de la liaison optique 30 et du convertisseur optique/électrique 13. Le calculateur 11 élabore l'ordre de braquage commandé à partir de cet ordre de déplacement du manche 4 et des signaux émis par le gyromètre 10, qui lui parviennent par l'intermédiaire de la liaison optique 34 et du convertisseur optique/électrique 14. L'ordre de braquage est transmis au module d'asservissement (liaison 38), puis transformé par le convertisseur électrique/optique 17 et transmis par la liaison optique 36, pour commander le déplacement de la gouverne 2 par l'intermédiaire de la servovalve optomécanique 7 et de la servocommande 6.

La position de la gouverne 2, mesurée par le capteur 19, est transmise par la liaison optique 32 jusqu'au convertisseur 15. Celui-ci adresse, sous forme électrique, le signal de retour de position de la gouverne au module d'asservissement 12 qui, à partir de celui-ci et de celui issu du calculateur 11, calcule le signal à délivrer à la servovalve 7.

On remarquera que le générateur hydroélectrique 20 (qui peut être de faible puissance) et le dispositif 9 sont les deux seuls éléments électriques du système de commande. Aucun d'entre eux n'a de liaison électrique avec le reste de l'avion ou du système. Ils peuvent donc être localement protégés contre toute agression extérieure.

De plus, puisque l'énergie électrique nécessaire au fonctionnement du dispositif de calcul et d'asservissement 9 est fournie par le générateur 20, le système de commande selon l'invention est indépendant du réseau électrique de bord de l'avion 1. Puisque le générateur 20 est mû à partir du circuit hydraulique 8 alimentant la gouverne 2 à commander, on voit que l'énergie nécessaire, d'une part, au déplacement de la gouverne 2, et, d'autre part, à la réalisation du signal de commande de ce déplacement est issue d'une seule et même source, à savoir celle alimentant le réseau 8 en fluide hydraulique sous pression.

En outre, on remarquera que, s'il est presque obligatoire que le générateur hydroélectrique 20 soit situé au voisinage immédiat de la servovalve 7 ou sur celle-ci (c'est-à-dire dans l'empennage 3) afin d'utiliser les tuyauteries du même circuit hydraulique, le dispositif de calcul et d'asservissement 9 peut, en revanche, être un emplacement quelconque de l'avion. Il sera en particulier possible de choisir une des zones de l'avion les moins susceptibles de perturbations, par exemple la zone centrale 39 de l'avion (proche du centre de gravité de l'avion), dans laquelle se trouve obligatoirement le gyromètre 10 (voir la figure 2).

Ainsi, grâce à l'invention, on peut:
— utiliser une source d'énergie unique et indépendante de l'alimentation électrique de bord;
— protéger et isoler le dispositif de calcul et d'asservissement 9 et donc réduire l'encombrement de ce dernier;
— utiliser des fibres optiques pour transporter les signaux de commande et l'alimentation en énergie;
— utiliser un système de stabilisation par gyromètre optique.

Il en résulte donc que le système selon l'invention est totalement insensible à toute agression extérieure et affranchi de toute panne du réseau électrique de bord. Il peut donc être utilisé en dernier secours pour un avion à stabilité artificielle.

Le générateur hydroélectrique 20 peut être du type rotatif, tel que micromoteur alternateur ou microturbo-alternateur, ou bien encore linéaire, tel que pulsateur statique avec cellule piézoélectrique ou équipage mobile avec cellule électromagnétique.

Les capteurs de position 18 et 19 peuvent comporter deux voies de mesure, afin d'effectuer une détection différentielle. Ils sont par exemple du type décrit dans la demande de brevet français n° 84-10468 (FR-A-25 66 896) déposée le 2 juillet 1984 par la demanderesse.

Le gyromètre optique 10 peut être du type à laser à cavité. Il peut également être du type à fibre optique mettant en œuvre l'effet SAGNAC.

Toutefois, il va de soi qu'au lieu d'utiliser un gyromètre optique comme mentionné ci-dessus, on pourrait utiliser un gyromètre électrique à condition de prévoir un convertisseur optique/électrique (analogue aux convertisseurs 13 à 16) entre la liaison optique 29 et ledit gyromètre. Notamment dans le cas où le dispositif 9 est proche du gyromètre 10, on pourrait alors remplacer la liaison optique 34 et le convertisseur optique/électrique 14 par une simple liaison électriquement conductrice. On pourrait également conserver la liaison optique 34 et le convertisseur optique/électrique 14 à condition d'intercaler un convertisseur électrique/optique (analogue aux convertisseurs 17 et 21 à 24) entre le gyromètre 10 et la liaison optique 34.

De plus, sur les figures 1 et 2, on n'a représenté qu'un seul gyromètre 10 pour assurer la stabilité de l'avion 1. Il est bien évident qu'il s'agit seulement d'une commodité de représentation et que le système de stabilisation peut comporter plusieurs gyromètres, ainsi qu'éventuellement un ou plusieurs accéléromètres.

La servovalve optomécanique 7 est par exemple du type à cristal se déformant sous l'effet d'un flux lumineux, cette déformation, fonction dudit flux, étant amplifiée à l'aide de l'énergie hydraulique du réseau 8.

Il va de soi que l'on pourrait utiliser une servovalve électrique ou piézoélectrique à la place de la servovalve optomécanique, à la condition de prévoir un convertisseur optique/électrique, alimenté par le générateur 20, entre la liaison optique 36 et ladite servovalve.

Les convertisseurs optique/électrique 13 à 16 et électrique/optique 17 à 21 peuvent être de tout type connu comportant une diode semi-conductrice optoélectronique réceptrice ou émettrice, associée à des moyens d'amplification.

Bien entendu, les diverses liaisons optiques sont réalisées par des fibres optiques.

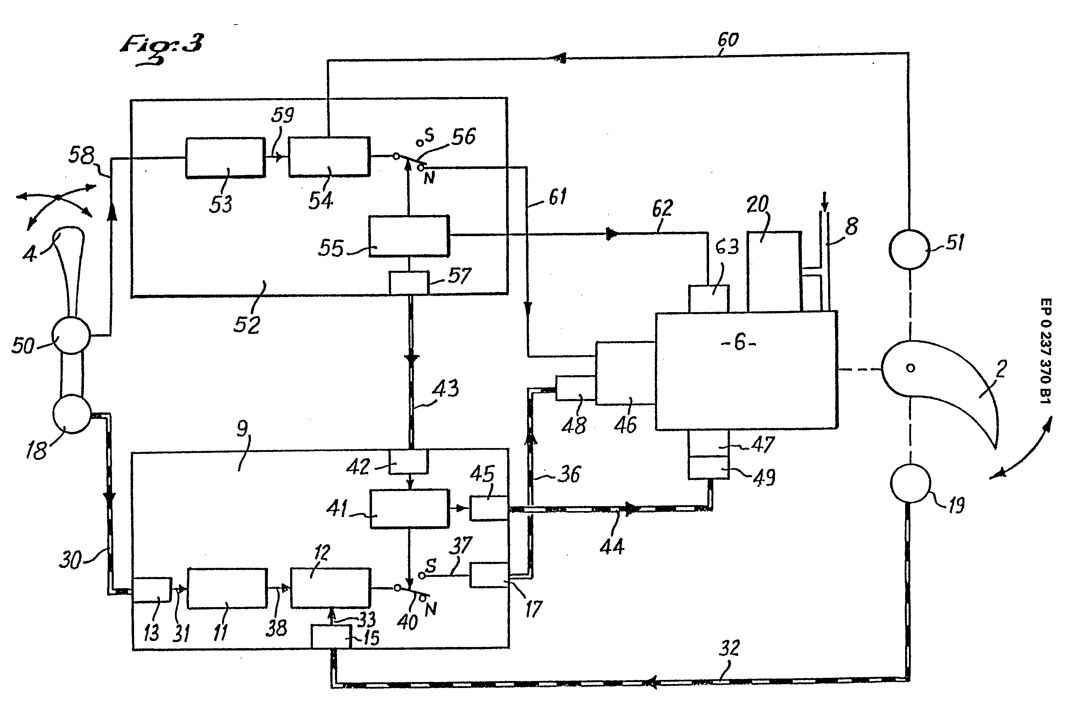

Sur les figures 1 et 2, on a supposé que le système de commande selon l'invention était le principal et unique système de commande de la gouverne 2. En revanche, la figure 3 illustre un exemple d'ensemble de commande de gouverne comportant un système électrique de type connu, destiné au fonctionnement normal, et un système conforme à l'invention, destiné au fonctionnement de secours et appelé ci-après «système optique».

Le système selon l'invention, représenté sur la figure 3 est identique à celui de la figure 1; toutefois, à des fins de clarté de dessin, on a supprimé le gyromètre 10, les convertisseurs optique/électrique 14 et 16, les convertisseurs électrique/optique 21 à 24, les liaisons 25 à 29 et les liaisons 34 et 35, pour ne laisser subsister que le calculateur 11, le module d'asservissement 12, le convertisseur optique/électrique 13, le convertisseur électrique/optique 17, les capteurs de position 18 et 19, le générateur 20, les liaisons 30 à 33 et les liaisons 36 à 38.

De plus:

— on a interposé un commutateur 40, dans la liaison électrique 37 reliant le module d'asservissement 12 au convertisseur électrique/optique 17, ce commutateur 40 étant commandé par un dispositif de commutation 41 pouvant recevoir des informations d'un convertisseur optique/électrique 42 relié à une liaison optique 43 et pouvant adresser des ordres sur une liaison optique 44, par l'intermédiaire d'un convertisseur électrique/optique 45;

— on a remplacé la servovalve 7 par une servovalve 46 à double commande, associée à deux électrovannes 47 et 48 pour la commande de la servocommande 6;

— on a disposé des convertisseurs optique/électrique 48 et 49, respectivement entre la liaison optique 36 et la servovalve 46 et entre la liaison 46 et l'électrovanne 47;

— en plus du capteur optique de position 18, on a associé au manche à balai 4 un capteur de position 50, purement électrique;

— en plus du capteur optique de position 19, on a associé à la gouverne 2 un capteur de position 51, purement électrique;

— en plus du dispositif de calcul et d'asservissement 9, qui incorpore alors avantageusement le commutateur 40, le dispositif de commutation 41 et les convertisseurs 42 et 45, on prévoit un dispositif de calcul et d'asservissement 52, comportant un calculateur 53, un module d'asservissement 54, un dispositif de commutation 55, un commutateur 56 et un convertisseur électrique/optique 57; le calculateur 53 reçoit des informations du capteur de position 50 par une liaison 58 et est relié au module d'asservissement 54 par une liaison 59. Le calculateur 53 peut également être associé à un gyromètre (non représenté), comme l'est le calculateur 11 au gyromètre 10. Le module d'asservissement 54 reçoit les informations du capteur de position 51 par une ligne 60 et peut adresser des ordres à la servovalve 46 à travers le commutateur 56 et une liaison 61. Le commutateur 55 peut adresser des informations à l'électrovanne 63 par une ligne 62. Enfin, le convertisseur électrique/optique 57 est relié à la liaison 43, qui assure ainsi la connexion entre les dispositifs 9 et 52.

Ainsi, lorsque le manche à balai est déplacé par le pilote, le capteur 50 envoie un signal électrique correspondant au dispositif 52, tandis que le capteur 18 envoie un signal optique au dispositif 9. Chacun des deux dispositifs 52 et 9 élabore, indépendamment de l'autre, l'ordre de braquage commandé en fonction des lois qui lui sont programmées et qui peuvent éventuellement être différentes (par exemple, lois sophistiquées pour la chaîne électrique et lois simples du type recopie de position pour la chaîne optique de secours).

Chacun des deux dispositifs a une structure duplex (commande et surveillance). Celle-ci est schématisée par l'élément de commutation correspondant 55-56 ou 40-41.

La servovalve 46 est du type connu à deux enroulements. Chacun d'eau est attaqué indépendamment par les ordres émanant des deux chaînes. Lorsque l'une des deux émet un ordre, l'autre n'émet rien.

Lorsque l'une des deux électrovannes 47 ou 63 est activée, la servocommande obéit aux ordres de la servovalve 46 et, lorsque aucune des deux n'est activée, elle est mise en mode amorti.

En fonctionnement normal, le dispositif de commutation 55 du calculateur 52 du système électrique:

— maintient le relais 56 correspondant sur la position N reliée à la liaison 61, permettant l'émission du signal de commande vers l'enroulement de la servovalve associé au système électrique,

— émet vers l'électrovanne correspondante 63 (par la liaison 62) l'ordre qui permet de mettre, puis de maintenir, la servocommande 6 en mode actif,

— envoie par la liaison optique 43 au dispositif de calcul et d'asservissement 9 du système optique de secours un signal lui signifiant qu'il doit être passif.

Ce signal est converti par le convertisseur optoélectronique 42 et transmis au dispositif de commutation 41 du calculateur 9 du système secours qui:

— maintient le relais 40 correspondant sur une position N interdisant l'émission de signaux de commande,

— maintient désactivée l'électrovanne 47 correspondante.

Par ailleurs, lorsque le système électrique ne peut plus assurer sa fonction (perte de l'alimentation électrique ou panne d'un élément du système constatée par le calculateur), le dispositif de commutation 55 de celui-ci:

— fait basculer le relais 56 correspondant sur une position S pour que cesse l'émission des ordres de commande vers la servovalve 46,

— désactive l'électrovanne 63 correspondante, ce qui permet de mettre la servocommande 6 en mode amorti, si l'autre électrovanne 47 n'est pas excitée,

— envoie au calculateur 9 du système optique un signal de panne (par la liaison 43).

A la réception de celui-ci, l'élément de commutation 41 du système de secours:

— fait basculer le relais 40 sur une position S reliée à la liaison 36, autorisant l'émission d'ordres de commande vers la servovalve 46,

— envoie à l'électrovanne 47 correspondante par la liaison 44 l'ordre d'activation de la servocommande 6.

On notera que, dans le système de la figure 3:

— en cas de bon fonctionnement du système normal électrique, le dispositif de calcul et d'asservissement 9 du système de secours fonctionne aussi; toutefois, l'ordre de commande du dispositif 9 n'est pas émis vers la servocommande 6,

— lorsque le système de secours est actif, après panne du système électrique, celui-ci redeviendra actif si la panne disparaît,

— si les deux systèmes sont en panne, les deux électrovannes 47 et 63 sont désexcitées et la servocommande 6 est mise en mode amorti,

— les deux systèmes sont complètement indépendants, sans aucun point commun électrique.

## Revendications

1. Système pour la commande d'une surface aérodynamique mobile (2) d'un aéronef (1) comprenant:

— un organe de commande volontaire (4), dont le déplacement est représentatif du déplacement désiré pour ladite surface aérodynamique mobile (2);

— un premier capteur de position (18), associé audit organe de commande volontaire (4) et délivrant un premier signal optique représentatif du déplacement dudit organe de commande (4);

— une servocommande (6) reliée à une source de puissance (8) susceptible d'actionner ladite surface aérodynamique (2) sous le contrôle d'une servovalve (7, 46);

— un dispositif électrique de calcul et d'asservissement (9), interposé entre ledit organe de commande volontaire (4) et ladite servocommande (6);

— un second capteur de position (19), associé à ladite surface aérodynamique (2) et délivrant un second signal optique représentatif du déplacement de ladite surface aérodynamique (2), ce second signal étant transmis audit dispositif électrique de calcul et d'asservissement (9);

— des premiers (13) et des seconds (15) moyens de conversion optique/électrique associés audit dispositif électrique de calcul et d'asservissement (9);

— des premiers moyens de conversion électrique/optique (17) associés audit dispositif de calcul et d'asservissement (9);

— des première (30), seconde (32) et quatrième (36) liaisons par fibres optiques établies, respectivement, entre:

— ledit premier capteur de position (18) et lesdits premiers moyens de conversion optique/électrique (13);

— ledit second capteur de position (19) et lesdits seconds moyens de conversion optique/électrique (15);

— lesdits premiers moyens de conversion électrique/optique (17) et la servovalve (7), caractérisé en ce que:

— l'énergie électrique nécessaire au fonctionnement dudit dispositif électrique de calcul et d'asservissement (9) est dérivée de ladite source de puissance (8) par l'intermédiaire de moyens d'alimentation électrique (20);

— des seconds moyens de conversion électrique/optique (21) sont associés auxdits moyens d'alimentation électrique (20);

— des troisièmes moyens de conversion optique/électrique (16) sont associés audit dispositif électrique de calcul et d'asservissement (9), et

— une troisième liaison (25) par fibre optique est établie entre lesdits seconds moyens de conversion électrique/optique (21) et lesdits troisièmes moyens de conversion optique/électrique (16).

2. Système selon la revendication 1, dans lequel ledit organe de commande volontaire (4) et ledit premier capteur de position (18) se trouvent dans le poste de pilotage (5) de l'aéronef (1), alors que ladite servocommande (6), ladite servovalve (7, 46) et ledit second capteur de position (19) sont disposés au voisinage (3) de ladite surface aérodynamique mobile (2), caractérisé en ce que les premiers, seconds et troisièmes moyens de conversion optique/électrique (13, 15, 16), lesdits premiers moyens de conversion électrique/optique (17) et le dispositif de calcul et d'asservissement (9) sont disposés dans la partie centrale (39) dudit aéronef (1) au voisinage du centre de gravité de celui-ci et en ce que lesdits moyens d'alimentation électrique (20) et lesdits seconds moyens de conversion électrique/optique (21) sont disposés au voisinage (3) de ladite surface aérodynamique mobile (2).

3. Système selon la revendication 2, destiné à un aéronef (1) à stabilité artificielle pourvu d'un dispositif gyrométrique (10) de stabilisation, disposé dans la partie centrale (39) dudit aéronef au voisinage du centre de gravité de cet aéronef, caractérisé en ce que ledit dispositif gyrométrique (10) émet des signaux qui sont adressés audit dispositif de calcul et d'asservissement (9) par une cinquième liaison par fibres optiques (34), ledit dispositif de calcul et d'asservissement (9) comportant des quatrièmes moyens (14) de conversion optique/électrique reliés à ladite cinquième liaison (34).

4. Système selon la revendication 3, caractérisé en ce que des troisièmes moyens de conversion électrique/optique (24) sont associés auxdits moyens d'alimentation électrique (20) et sont reliés audit dispositif gyrométrique (10) par une sixième liaison par fibres optiques (29).

5. Système selon l'une quelconque des revendications 1 à 4,
caractérisé en ce que des quatrièmes (22) et cinquièmes (23) moyens de conversion électrique/optique sont associés auxdits moyens d'alimentation électrique (20) et sont respectivement reliés auxdits premier et second capteurs de position (18 et 19) par une septième (27) et une huitième (28) liaison par fibres optiques.

6. Système selon l'une quelconque des revendications 1 à 5,
caractérisé en ce que ladite servovalve (7) est du type optomécanique.

7. Système selon l'une quelconque des revendications 1 à 5,
caractérisé en ce que ladite servovalve (46) est à commande électrique et en ce que des cinquièmes moyens de conversion optique/électrique (48) sont associés à ladite servovalve et sont reliés à ladite quatrième liaison (36) par fibres optiques.

8. Système selon l'une quelconque des revendications 1 à 7, dans lequel ladite source de puissance susceptible d'actionner la surface aérodynamique (2) est électrique,
caractérisé en ce que lesdits moyens d'alimentation électrique (20) sont constitués par un diviseur de tension ou analogue.

9. Système selon l'une quelconque des revendications 1 à 7, dans lequel ladite source de puissance susceptible d'actionner la surface aérodynamique (2) est hydraulique,
caractérisé en ce que lesdits moyens d'alimentation électrique (20) sont constitués par un générateur hydroélectrique.

10. Ensemble pour la commande d'une surface aérodynamique mobile (2) d'un aéronef (1),
caractérisé en ce qu'il comporte le système spécifié sous l'une quelconque des revendications 1 à 9, associé à un autre système de nature électrique, les deux systèmes étant pilotés par un organe de commande volontaire unique (4) et actionnant une servocommande unique (6) et en ce que lesdits systèmes sont reliés entre eux par une liaison de communication par fibres optiques (43).

11. Ensemble selon la revendication 10,
caractérisé en ce que le système électrique fonctionne en pilotage normal et en ce que le système selon l'invention fonctionne en pilotage de secours.

12. Ensemble selon l'une des revendications 10 ou 11,
caractérisé en ce que ladite servocommande (6) et ladite servovalve (46) sont associées à deux électrovannes (47, 63), dont l'une est commandée par l'un desdits systèmes et l'autre par l'autre système.

## Patentansprüche

1. System zur Steuerung einer beweglichen aerodynamischen Fläche (2) eines Luftfahrzeugs (1) mit:
— einem beliebigen Steuerorgan (4), dessen Ortsveränderung repräsentativ für die gewünschte Ortsveränderung der beweglichen aerodynamischen Fläche (2) ist;
— einem ersten, dem beliebigen Steuerorgan (4) zugeordneten Positionssensor (18), der ein erstes, für die Ortsveränderung des Steuerorgans (4) repräsentatives optisches Signal liefert;
— einer mit einer Leistungsquelle (8) verbundenen Servosteuerung (6), die die aerodynamische Fläche (2) unter Überwachung eines Servoventils (7, 46) betätigen kann;
— einer elektrischen Rechen- und Regeleinrichtung (9), angeordnet zwischen dem beliebigen Steuerorgan (4) und der Servosteuerung (6);
— einem zweiten, der aerodynamischen Fläche (2) zugeordneten Positionssensor (19), der ein zweites, für die Ortsveränderung der aerodynamischen Fläche (2) repräsentatives optisches Signal liefert, wobei dieses zweite Signal zu der elektrischen Rechen- und Regeleinrichtung (9) übertragen wird;
— ersten (13) und zweiten (15), der elektrischen Rechen- und Regeleinrichtung (9) zugeordneten Mitteln zur opto-elektrischen Umwandlung;
— ersten, der elektrischen Rechen- und Regeleinrichtung (9) zugeordneten Mitteln (17) zur elektro-optischen Umwandlung;
— ersten (30), zweiten (32) und vierten (36) Verbindungen über optische Fasern zwischen jeweils:
— dem ersten Positionssensor (18) und den ersten Mitteln (13) zur opto-elektrischen Umwandlung;
— dem zweiten Positionssensor (19) und den zweiten Mitteln (15) zur opto-elektrischen Umwandlung;
— den ersten Mitteln (17) zur elektro-optischen Umwandlung und dem Servoventil (7),
dadurch gekennzeichnet, dass:
— die für die Arbeitsweise der elektrischen Rechen- und Regeleinrichtung (9) notwendige elektrische Energie aus der Leistungsquelle (8) über elektrische Versorgungsmittel (20) entnommen wird;
— zweite Mittel (21) zur elektro-optischen Umwandlung den elektrischen Versorgungsmitteln (20) zugeordnet sind;
— dritte Mittel (16) zur opto-elektrischen Umwandlung der elektrischen Rechen- und Regeleinrichtung (9) zugeordnet sind; und dass
— eine dritte Verbindung (25) über optische Fasern zwischen den zweiten Mitteln (21) zur elektro-optischen Umwandlung und den dritten Mitteln (16) zur opto-elektrischen Umwandlung vorgesehen ist.

2. System nach Anspruch 1, bei dem sich das beliebige Steuerorgan (4) und der erste Positionssensor (18) im Pilotenraum (5) des Luftfahrzeugs (1) befinden, während die Servosteuerung (6), das Servoventil (7, 46) und der zweite Positionssensor (19) in der Nähe (3) der beweglichen aerodynamischen Fläche (2) angeordnet sind,
dadurch gekennzeichnet, dass die ersten, zweiten und dritten Mittel (13, 15, 16) zur opto-elektrischen Umwandlung, die ersten Mittel (17) zur elektro-optischen Umwandlung und die Rechen-und Regeleinrichtung (9) im zentralen Teil (39) des Luftfahrzeugs (1) in der Nähe dessen Schwerpunkts angeordnet sind, und dass die elektrischen Versorgungsmittel (20) und die zweiten Mittel (21) zur elektro-optischen Umwandlung in der Nähe (3) der beweglichen aerodynamischen Fläche (2) angeordnet sind.

3. System nach Anspruch 2 für ein Luftfahrzeug (1) mit künstlicher Stabilisierung, versehen mit einer im zentralen Teil (39) des Luftfahrzeugs in der Nähe dessen Schwerpunkts angeordneten gyrometrischen Stabilisierungseinrichtung (10), dadurch gekennzeichnet, dass die gyrometrische Einrichtung (10) Signale emittiert, die der Rechen- und Regeleinrichtung (9) über eine fünfte Verbindung (34) über optische Fasern zugeführt werden, wobei die Rechen- und Regeleinrichtung (9) vierte, mit der fünften Verbindung (34) verbundene Mittel (14) zur opto-elektrischen Umwandlung umfasst.

4. System nach Anspruch 3, dadurch gekennzeichnet, dass dritte Mittel (24) zur elektro-optischen Umwandlung den elektrischen Versorgungsmitteln (20) zugeordnet sind, und dass sie mit der gyrometrischen Einrichtung (10) über eine sechste Verbindung (29) über optische Fasern verbunden sind.

5. System nach einem der Ansprüche 1 bis 4, dadurch gekennzeichnet, dass vierte (22) und fünfte (23) Mittel zur elektro-optischen Umwandlung den elektrischen Versorgungsmitteln (20) zugeordnet sind und jeweils den ersten und zweiten Positionssensoren (18 und 19) über eine siebte (27) und eine achte (28) Verbindung über optische Fasern zugeordnet sind.

6. System nach einem der Ansprüche 1 bis 5, dadurch gekennzeichnet, dass das Servoventil (7) vom optomechanischen Typ ist.

7. System nach einem der Ansprüche 1 bis 5, dadurch gekennzeichnet, dass das Servoventil (46) elektrisch angesteuert wird, und dass fünfte Mittel (48) zur opto-elektrischen Umwandlung dem Servoventil (46) zugeordnet sind und mit der vierten Verbindung (36) über optische Fasern verbunden sind.

8. System nach einem der Ansprüche 1 bis 7, wobei die Leistungsquelle zur Betätigung der aerodynamischen Fläche (2) elektrischer Art ist, dadurch gekennzeichnet, dass die elektrischen Versorgungsmittel (20) aus einem Spannungsteiler o. ä. bestehen.

9. System nach einem der Ansprüche 1 bis 7, wobei die Leistungsquelle zur Betätigung der aerodynamischen Fläche (2) hydraulischer Art ist, dadurch gekennzeichnet, dass die elektrischen Versorgungsmittel (20) aus einem hydroelektrischen Generator bestehen.

10. Aufbau zur Steuerung einer beweglichen aerodynamischen Fläche (2) eines Luftfahrzeugs (1), dadurch gekennzeichnet, dass er das unter einem der Ansprüche 1 bis 9 beschriebene, einem anderen System elektrischer Art zugeordnete System umfasst, wobei die beiden Systeme von einem einzigen beliebigen Steuerorgan (4) gesteuert werden und eine einzige Servosteuerung (6) betätigen, und dass die Systeme miteinander über eine Verbindung (43) aus optischen Fasern verbunden sind.

11. Aufbau nach Anspruch 10, dadurch gekennzeichnet, dass das elektrische System bei normaler Fluglagenregelung arbeitet, und dass das System gemäss der Erfindung bei Notfallfluglagenregelung arbeitet.

12. Aufbau nach einem der Ansprüche 10 oder 11, dadurch gekennzeichnet, dass die Servosteuerung (6) und das Servoventil (46) zwei Magnetventilen (47, 63) zugeordnet sind, von denen eines von einem der Systeme und das andere vom anderen System gesteuert wird.

## Claims

1. System for controlling a moving aerodynamic surface (2) of an aircraft (1), comprising:
— a voluntary control member (4), the displacement of which is representative of the displacement intended for said moving aerodynamic surface (2);
— a first position sensor (18), associated with said voluntary control member (4) and emitting a first optic signal representative of the displacement of said control member (4);
— a servo-control (6) connected to a power source (8) capable of actuating said aerodynamic surface (2), being monitored by a servo-valve (7, 46);
— an electric computing and controlling device (9) disposed between said voluntary control member (4) and said servo-control (6);
— a second position sensor (19), associated with said aerodynamic surface (2) and emitting a second optic signal representative of the displacement of said aerodynamic surface (2), the second signal being transmitted to said electric computing and controlling device (9);
— first (13) and second (15) optic/electric converting means associated with said electric computing and controlling device (9);
— first electric/optic converting means (17) associated with said electric computing and controlling device (9);
— first (30), second (32) and fourth (36) connections by optic fibres established, respectively, between:
— said first position sensor (198) and said first optic/electric converting means (13);
— said second position sensor (19) and said second optic/electric converting means (15);
— said first electric/optic converting means (17) and the servo-valve (7), characterized in that:
— the electric energy required for the operation of said electric computing and controlling device (9) is derived from said power source (8) via electric supplying means (20);
— second electric/optic converting means (21) are associated with said electric supplying means (20);

— third optic/electric converting means (16) are associated with said electric computing and controlling device (9); and

— a third connection (25) by optic fibres is established between said second electric/optic converting means (21) and said third optic/electric converting means (16).

2. System according to claim 1, wherein said voluntary control member (4) and said first position sensor (18) are in the cockpit (5) of the aircraft (1), whereas said servo-control (6), said servo-valve (7, 46) and said second position sensor (19) are disposed in the vicinity (3) of said moving aerodynamic surface (2), characterized in that said first, second and third optic/electric converting means (13, 15, 16), said first electric/optic converting means (17) and the computing and controlling device (9) are disposed in the central portion (39) of said aircraft (1) in the vicinity of the centre of gravity thereof, and in that said electric supplying means (20) and said second electric/optic converting means (21) are disposed in the vicinity (3) of said moving aerodynamic surface (2).

3. System according to claim 2, for use in an aircraft (1) with artificial stability provided with a gyrometric stabilization device (10), disposed in the central portion (39) of said aircraft in the vicinity of the centre of gravity of the aircraft, characterized in that said gyrometric device (10) emits signals which are addressed to said computing and controlling device (9) by a fifth connection (34) by optic fibres, said computing and controlling device (9) comprising fourth optic/electric converting means (14) connected to said fifth connection (34).

4. System according to claim 3, characterized in that third electric/optic converting means (24) are associated with said electric supplying means (20) and are connected with said gyrometric device (10) by a sixth connection (29) by optic fibres.

5. System according to any one of claims 1 to 4, characterized in that fourth (22) and fifth (23) electric/optic converting means are associated with said electric supplying means (20) and are respectively connected with said first and second position sensors (18 and 19) by a seventh (27) and an eighth (28) connection by optic fibres.

6. System according to any one of claims 1 to 5, characterized in that said servo-valve (7) is of the opto-mechanical type.

7. System according to any one of claims 1 to 5, characterized in that said servo-valve (46) is electrically controlled and in that fifth optic/electric converting means (48) are associated with said servo-valve and are connected with said fourth connection (36) by optic fibres.

8. System according to any one of claims 1 to 7, wherein said power source capable of actuating the aerodynamic surface (2) is an electric source, characterized in that said electric supplying means (20) consist of a voltage divider or similar.

9. System according to any one of claims 1 to 7, wherein said power source capable of actuating the aerodynamic surface (2) is a hydraulic source, characterized in that said electric supplying means (20) consist of a hydroelectric generator.

10. Assembly for controlling a moving aerodynamic surface (2) of an aircraft (1), characterized in that it comprises the system according to any one of claims 1 to 9, associated with another system of electric nature, both systems being controlled by a single voluntary control member (4) and actuating a single servo-control (6) and in that said systems are connected one with the other by a connection (43) by optic fibres.

11. Assembly according to claim 10, characterized in that the electric system operates during normal pilotage and in that the system according to the invention operates during emergency pilotage.

12. Assembly according to one of claims 10 or 11, characterized in that said servo-control (6) and said servo-valve (46) are associated with two electro-valves (47, 63), one of which is controlled by one of said systems and the other by the other system.

Fig.1

EP 0 237 370 B1

Fig. 2

EP 0 237 370 B1

Fig:3

EP 0 237 370 B1